# EUROPEAN PATENT APPLICATION

(11) **EP 4 002 249 A1**
(43) Date of publication of application: **25.05.2022**
(21) Application number: 21176748.8
(22) Date of filing: 28.05.2021
(51) Int. Cl.: G06Q 20/38

(54) **DATA PROCESSING METHOD AND APPARATUS, ELECTRONIC DEVICE AND STORAGE MEDIUM**

(30) Priority: 16.11.2020 CN 202011280559
(71) Applicant: Beijing Xiaomi Mobile Software Co., Ltd., Beijing 100085 (CN)
(72) Inventor: LI, Zhixiang, Beijing, 100085 (CN)
(74) Representative: Gunzelmann, Rainer

(57) **Abstract**

A data processing method includes: selection controls of at least two different measurement units are displayed (S100); a calculation parameter is acquired (S200); a measurement unit of the calculation parameter is determined according to a selection operation executed on a selection control (S300); and measurement unit unification is performed on at least two calculation parameters of different measurement units to obtain a calculation result of the calculation parameters (S400).

## Description

### TECHNICAL FIELD

The present disclosure generally relates to the technical field of data processing, and more particularly, to a data processing method and apparatus, an electronic device and a storage medium.

### BACKGROUND

With the development of computer technologies and conveniences brought by the computer technologies, the computer technologies have been applied to more and more fields and scenarios. During practical applications in each application field and application scenario, corresponding data may be used, the data may include various types of data, and the data may be processed to obtain required information.

In processes of using the data, the data may be correspondingly processed through data processing technologies to obtain the required information. Due to constant increase of various application requirements, corresponding application fields and application scenarios also increase, and in different application fields and application scenarios, requirements on the data processing technologies also constantly increase.

### SUMMARY

The present disclosure provides a data processing method and apparatus, an electronic device and a storage medium.

A first aspect of embodiments of the present disclosure provides a data processing method, which may include: displaying selection controls of at least two different measurement units; acquiring a calculation parameter; determining a measurement unit of the calculation parameter according to a selection operation executed on a selection control; and performing measurement unit unification on at least two calculation parameters of different measurement units to obtain a calculation result of the calculation parameters.

In an embodiment, the operation that the measurement unit of the calculation parameter is determined according to the selection operation executed on the selection control may include: the measurement unit corresponding to the calculation parameter is determined according to a selection operation executed on a selection control after the calculation parameter is acquired.

In an embodiment, the operation that measurement unit unification is performed on the at least two calculation parameters of the different measurement units to obtain the calculation result of the calculation parameters may include: a measurement unit of the calculation result is determined according to a selection operation executed on a measurement unit after measurement units of the calculation parameters are determined; the measurement units of the at least two calculation parameters are converted into the measurement unit of the calculation result in a unified manner to obtain converted calculation parameters; and the calculation result is obtained according to the at least two calculation parameters obtained by measurement unit conversion.

In an embodiment, the operation that the selection controls of the at least two different measurement units are displayed may include at least one of: displaying the selection controls of the at least two different measurement units on an application interface of a calculation application; or displaying the selection controls of the at least two different measurement units in a floating window.

In an embodiment, the measurement unit may include at least one of: currency units of different currency types; weight units of different weight measurement systems; volume units of different volume measurement systems; temperature units of different temperature measurement systems; or humidity units of different humidity measurement systems.

A second aspect of embodiments of the present disclosure provides a data processing apparatus, which may include: a display module, configured to display selection controls of at least two different measurement units; an acquisition module, configured to acquire a calculation parameter; a determination module, configured to determine a measurement unit of the calculation parameter according to a selection operation executed on a selection control; and a calculation module, configured to perform measurement unit unification on at least two calculation parameters of different measurement units to obtain a calculation result of the calculation parameters.

In an embodiment, the determination module may include a first determination unit, configured to determine the measurement unit corresponding to the calculation parameter according to a selection operation executed on a selection control after the calculation parameter is acquired.

In an embodiment, the calculation module may include: a second determination unit, configured to determine a measurement unit of the calculation result according to a selection operation executed on a measurement unit after measurement units of the calculation parameters are determined; a conversion unit, configured to convert the measurement units of the at least two calculation parameters into the measurement unit of the calculation result in a unified manner to obtain converted calculation parameters; and a calculation unit, configured to obtain the calculation result according to the at least two calculation parameters obtained by measurement unit conversion.

In an embodiment, the display module may include at least one of: a first display module, configured to display the selection controls of the at least two different measurement units on an application interface of a calculation application; or a second display module, configured to display the selection controls of the at least two different measurement units in a floating window.

A third aspect of embodiments of the present disclosure provides an electronic device, which may include: a processor and a memory configured to store executable instructions capable of running in the processor; when the processor is configured to run the executable instructions, the executable instructions may execute any abovementioned methods.

A fourth aspect of embodiments of the present disclosure provides a computer-readable storage medium, in which computer-executable instructions may be stored, the computer-executable instructions may be executed by a processor to implement any abovementioned methods.

The technical solutions provided in the embodiments of the present disclosure may have the following beneficial effects.

The selection controls of the at least two different measurement units are displayed such that the measurement units corresponding to these selection controls may be determined. The calculation parameter is acquired at first, and after the calculation parameter is acquired, the measurement unit of the calculation parameter is determined according to the selection operation executed on these selection control, so that the measurement unit corresponding to the calculation parameter may be determined. The operations are executed on calculation parameters acquired every time, and furthermore, a measurement unit of each acquired calculation parameter may be determined. Measurement unit unification is performed on the at least two calculation parameters of the different measurement units to obtain parameters corresponding to the same measurement unit. Through the technical solution, calculation parameters of different measurement units are unified according to a measurement unit to obtain a calculation result after unification of the calculation parameters. Therefore, the complexity in calculation of the calculation parameters of the different measurement units is reduced, and measurement unit unification of the calculation parameters of the different measurement units is combined with obtaining of the calculation result after unification to implement conversion of the calculation parameters of the different measurement units and calculation of parameters obtained by conversion on the same interface to eliminate a step of switching an interface for conversion of the calculation parameters of the different measurement units and an interface for further calculation of the calculation parameters obtained by conversion, improve conveniences for calculation of a user, reduce unnecessary complex operations of the user and improve user experiences.

It is to be understood that the above general descriptions and detailed descriptions below are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the description, serve to explain the principles of the present disclosure.
FIG. 1 is a schematic diagram illustrating data processing of a commonly used calculation application.
FIG. 2 is a flow chart showing a data processing method, according to an exemplary embodiment.
FIG. 3 is a schematic diagram illustrating displaying of selection controls of multiple different measurement units, according to an exemplary embodiment.
FIG. 4 is a schematic diagram illustrating acquisition of a calculation parameter and determination of a measurement unit of the calculation parameter, according to an exemplary embodiment.
FIG. 5 is another schematic diagram illustrating acquisition of a calculation parameter and determination of a measurement unit of the calculation parameter, according to an exemplary embodiment.
FIG. 6 is another schematic diagram illustrating acquisition of a calculation parameter and determination of a measurement unit of the calculation parameter, according to an exemplary embodiment.
FIG. 7 is a flow chart showing obtaining of a calculation result of calculation parameters, according to an exemplary embodiment.
FIG. 8 is a schematic diagram illustrating displaying of a measurement unit of a calculation result, according to an exemplary embodiment.
FIG. 9 is a schematic diagram illustrating obtaining of a calculation result, according to an exemplary embodiment.
FIG. 10 is a schematic diagram illustrating redetermination of a measurement unit of a calculation result, according to an exemplary embodiment.
FIG. 11 is a schematic diagram illustrating a calculation result after redetermination of a measurement unit, according to an exemplary embodiment.
FIG. 12 is another schematic diagram illustrating data processing, according to an exemplary embodiment.
FIG. 13 is a structure diagram of a data processing apparatus, according to an exemplary embodiment.
FIG. 14 is a block diagram of a terminal device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

In the field of data processing, a common method includes processing data through a calculation application. When data is calculated through a common calculation application, a pure number may be calculated. Some other calculation applications have some conversion functions, for example, numerical conversion between different measurement units, including conversion between currency units, or considered as currency conversion between different currencies. That is, conversion of a parameter of a currency into a parameter of another currency is supported to implement conversion between the two different currencies. Simultaneous conversion of a parameter of a currency into parameters of multiple other currencies may also be supported to simultaneously implement conversion between the currency and the multiple other different currencies. Herein, the calculation application may be an application with a calculation function such as a calculator. Numerical conversion between different measurement units may also include numerical conversion between different length units, numerical conversion between different weight units and numerical conversion between different time units.

However, when data is processed through these calculation applications, only one currency may be converted, data obtained by currency conversion is unavailable, and the data obtained by currency conversion cannot be continued to be further processed. If the data obtained by currency conversion needs to be further processed, interface switching needs to be executed again to switch an interface to a calculation interface for numerical calculation. The calculation application needs to receive the data re-input by a user and obtained by currency conversion again.

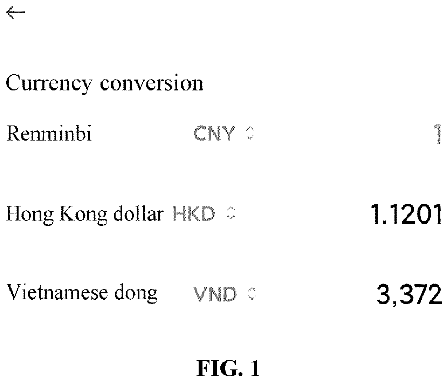

FIG. 1 is a schematic diagram illustrating data processing of a commonly used calculation application. The interface is an interface for conversion between different currency types. According to exchange rates between different currency types, China Yuan is taken as a currency type to be converted, and Hong Kong dollar and Vietnamese dong are taken as target conversion currency types. According to a currency conversion relationship between China Yuan and each of Hong Kong dollar and Vietnamese dong, 1 China Yuan is converted into 1.1201 Hong Kong dollars and 3,372 Vietnamese dongs. A function of converting a currency type into multiple other currency types is realized.

However, no other operations, such as further processing over the obtained 1.1201 Hong Kong dollars and 3,372 Vietnamese dongs, may be executed, and processing may be executed only to the stage illustrated in the figure. If the obtained data is to be further processed, it is also necessary to exit the interface and return to or switch the interface to a numerical calculation interface and re-input the data for further calculation. Moreover, multiple currency types to be converted may also not be simultaneously converted through these calculation applications. If multiple currency types to be converted need to be converted, the operations illustrated in the figure need to be repeated for many times to convert each currency type independently.

Of course, the currency types illustrated in the figure may also be other currency types or other measurement units such as different weight units for conversion.

Therefore, the functions of these calculation applications for data processing are relatively undiversified, resulting in complex operations of the user and bringing poor user experiences to the user.

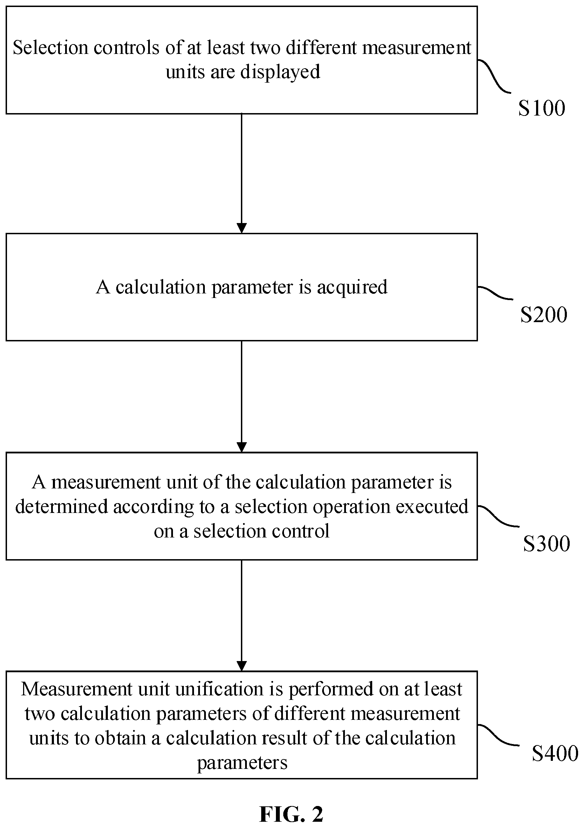

Referring to FIG. 2, FIG. 2 is a flow chart showing a data processing method according to the technical solution. The data processing method includes operations as follows.

At S100, selection controls of at least two different measurement units are displayed.

At S200, a calculation parameter is acquired.

At S300, a measurement unit of the calculation parameter is determined according to a selection operation executed on a selection control.

At S400, measurement unit unification is performed on at least two calculation parameters of different measurement units to obtain a calculation result of the calculation parameters.

The method may be executed at least in a mobile terminal, namely an execution body of the method may at least include the mobile terminal. The mobile terminal may include a mobile phone, a tablet computer, a vehicle-mounted central control device, a wearable device, a smart device, and the like. The smart device may further include a smart office device, a smart home device, and the like.

The selection controls of the at least two different measurement units are displayed at S100, and the measurement units may be selected through the selection controls. After selection controls of multiple different measurement units are displayed, different measurement units may be selected through the selection controls of these different measurement units. Herein, the measurement unit may include at least one of: currency units of different currency types, weight units of different weight measurement systems, volume units of different volume measurement systems, temperature units of different temperature measurement systems, humidity units of different humidity measurement systems, different length units, different weight units or different time units for numerical conversion.

For example, when selection controls of currency units of different currency types are displayed, selection controls of currency units of at least two different currency types are displayed. The number of the displayed selection controls of the currency units may be adjusted according to practical requirements. For example, a selection control of China Yuan (CNY), a selection control of Hong Kong dollar (HKD), a selection control of US dollar (USD) and a selection control of Vietnamese dong (VND) are displayed.

For another example, when selection controls of weight units of different weight measurement systems are displayed, selection controls of weight units of at least two different weight measurement systems are displayed, for example, a selection control of gram (g), a selection control of ton (t), a selection control of pound (b), a selection control of ounce (oz), a selection control of quintal (q), a selection control of dram (dr) and the like.

When a selection control of a measurement unit is displayed, the displayed selection control may be identified with a short name or abbreviation of the measurement unit. For example, when China Yuan is displayed, the selection control of China Yuan may be identified with CNY, and when the selection control of the weight unit gram is displayed, the selection control of gram may be identified with g.

A specific display manner may be displayed on an application interface of a calculation application and may also be displaying in form of a floating window, and the like. No limits are made herein if selection controls of multiple different measurement units may be displayed.

The displayed multiple measurement units include: different measurement units such as time measurement units and spatial measurement units of the same measurement object. The measurement object may be weight, time, currency type and the like.

Before different measurement units are displayed, selection information of different measurement objects is displayed through a pull-down menu and the like, and multiple measurement units are determined to be displayed based on a selection operation. For example, if "weight" is selected as a measurement object, different measurement units such as ton, kilogram, pound and the like of weight are displayed. Different measurement units of a default measurement object may be displayed when the interface is entered, or different measurement units of a measurement object corresponding to a highest use frequency are displayed according to use frequencies.

In an embodiment, the selection controls of the at least two different measurement units may be displayed on the application interface of the calculation application.

The selection controls are displayed in a first display region of the display interface of the calculation application, and the first display region is a display region for displaying acquired input calculation parameters and a calculation symbol and a display region for an obtained calculation result. An application interface of each calculation application includes a first region, and the first region is configured to display input calculation parameters, a calculation symbol, an obtained calculation result, and the like.

The selection controls may also be displayed in a second display region of the display interface of the calculation application, and the second display region is a virtual numeric keyboard region of the calculation application or a virtual calculation symbol keyboard region. A region where calculation numbers 0 to 9 are displayed is a display region of a virtual numeric keyboard, and a display region of calculation symbols such as "+", "-", "*" and "÷" is a display region of a virtual calculation symbol keyboard.

Displaying the selection controls in the second region may avoid influences on displaying of the first display region and improve a display effect of the first region.

In another embodiment, the selection controls of the at least two different measurement units are displayed in a floating window.

The form of the floating window may also be adopted for displaying, and the selection controls of the measurement units are displayed in the floating window. The specific display manner for the selection controls of the measurement units is not limited herein, and all manners that selection controls of multiple different measurement units may be displayed, for example, scrolling displaying, fall within the scope of protection of the embodiment.

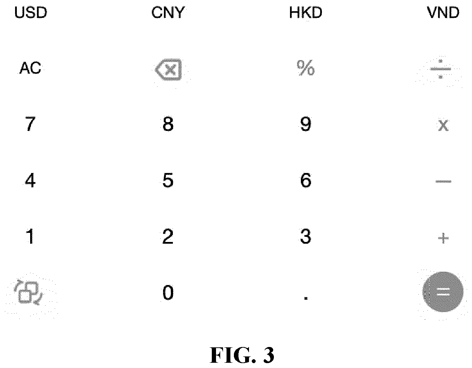

Referring to FIG. 3, FIG. 3 is a schematic diagram illustrating displaying of selection controls of multiple different measurement units.

The interface illustrated in FIG. 3 is the calculation interface of the calculation application, and selection controls of multiple different measurement units are displayed on the calculation interface. A display manner is displaying in the second display region of the display interface of the calculation application, namely the selection controls of the multiple different measurement units are displayed in the virtual calculation symbol keyboard region. The selection controls may be displayed in the second display region without influencing normal displaying of selection controls of the calculation symbols and normal selection operations.

The measurement units are, for example, currency units of different currency types, and in such case, the selection controls of the multiple different measurement units include the selection control of US dollar represented by USD, the control selection of China Yuan represented by CNY, the selection control of Hong Kong dollar represented by HKD and the selection control of Vietnamese dong represented by VND. Of course, selection controls of other measurement units may also be displayed, and the number is not limited. When the number is too large, a preset number of selection controls may be displayed and other hidden selection controls are displayed through an operation such as sliding and the like.

At S200, the calculation parameter is acquired.

Before data is calculated, data which needs to be calculated needs to be acquired at first. In the embodiment, the calculation parameter needs to be acquired at first. A manner for acquiring the calculation parameter may be acquiring according to the virtual numeric keyboard. Herein, the acquired calculation parameter is a calculation parameter corresponding to the measurement unit and not converted in a unified manner.

In the embodiment of the present disclosure, the calculation parameter may be a numerical value participating in calculation, for example, a currency value corresponding to a currency unit.

Operations S100 and S200 may be executed in a random sequence, operation S100 may be executed at first, or operation S200 may be executed at first. The selection controls of the multiple different measurement units may be displayed at first, and then the calculation parameter is acquired. The two operations are executed without mutual influences. Or, the calculation parameter may be acquired at first, then the selection controls of the multiple different measurement units are displayed, and furthermore, the measurement unit of the acquired calculation parameter may be determined.

At S300, the measurement unit of the calculation parameter is determined according to the selection operation executed on the selection control.

After the calculation parameter is acquired, the data requiring data processing is determined. In the embodiment, calculation is implemented not purely for the calculation parameter, namely a number acquired through the virtual numeric keyboard is not directly calculated without considering another factor. Instead, the calculation parameter is combined with the other factor, and the calculation parameter is processed according to the other factor. In the embodiment, the calculation parameter is combined with the measurement unit, and the acquired calculation parameter is calculated according to the measurement unit.

After the calculation parameter is acquired, the measurement unit of the calculation parameter needs to be determined, and it may be determined according to the selection operation executed on the selection control. Since the selection controls of the multiple different measurement units have been displayed, each selection control corresponding to a unique measurement unit, the selection operation may be executed on a displayed selection control, and furthermore, the measurement unit of the calculation parameter may be determined according to the selection operation executed on the selection control.

Through the technical solution of the embodiment, acquisition of calculation parameters of multiple different measurement units and determination of the corresponding measurement units may be implemented at the same time to subsequently convert the calculation parameters measured by different measures into a unified measurement unit in the unified manner, so that unnecessary operations such as independent conversion of the calculation parameter of each measurement unit are reduced, furthermore, the calculation efficiency is improved, and user experiences are improved.

In an embodiment, a measurement unit corresponding to a calculation parameter is determined according to a selection operation executed on a selection control after the calculation parameter is acquired.

After a calculation parameter is acquired, a measurement unit of the presently acquired calculation parameter may be determined according to a selection operation executed on a selection control. In the operation, the calculation parameter acquired before the measurement unit is determined is determined as the same calculation parameter, after the measurement unit is determined, the calculation parameter corresponding to the determined measurement unit is also correspondingly determined, and if a calculation parameter acquired again does not correspond to the presently determined measurement unit and is not a calculation parameter corresponding to the presently determined measurement unit, the presently determined measurement unit is not a measurement unit of the calculation parameter acquired again.

Acquisition of the calculation parameter and determination of the measurement unit of the presently acquired calculation parameter are implemented in sequence, and the calculation parameter and measurement unit obtained by the two operations may be determined as a data information set to be processed. After the calculation parameter is acquired and the measurement unit of the presently acquired calculation parameter is determined, an operation of acquiring a next calculation parameter and determining a measurement unit of the next calculation parameter may be executed.

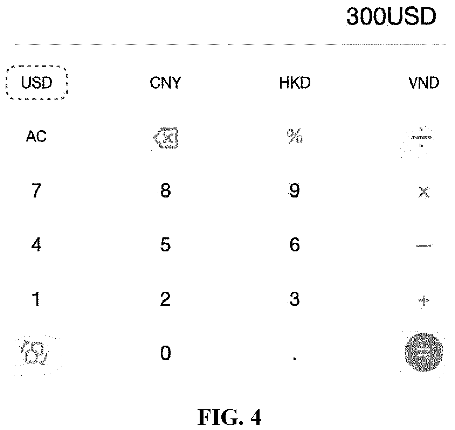

Referring to FIG. 4, FIG. 4 is a schematic diagram illustrating acquisition of a calculation parameter and determination of a measurement unit of the calculation parameter.

The selection controls of the multiple different measurement units are displayed in the calculation interface of the calculation application, and the calculation parameters may be acquired through the virtual numeric keyboard in the calculation application. After the calculation parameter is acquired, the measurement unit of the acquired calculation parameter may be determined. As illustrated in FIG. 4, after the calculation parameter 300 is acquired, the selection operation executed on the measurement unit is a selection operation executed on the selection control of the measurement unit USD illustrated as the dashed box, and it may be determined according to the selection operation executed on the measurement unit USD that the measurement unit of the calculation parameter 300 is USD. The region where the dashed box is located is the selection operation executed on the measurement unit and represents that the selection operation is executed on the selection control of the present measurement unit, and the measurement unit of the presently acquired calculation parameter is the measurement unit illustrated as the present dashed box.

In an embodiment, the method further includes: after the measurement unit of the calculation parameter is determined, a selection operation executed on a selection control of a calculation symbol is determined, and a calculation rule between the calculation parameters of the multiple measurement units is determined according to the selection operation executed on the selection control of the calculation symbol.

Since the calculation result further needs to be obtained after the calculation parameters of the multiple different measurement units are unified to obtain calculation parameters of the same measurement unit, after the measurement units of the calculation parameters are determined every time, calculation relationships between the calculation parameters of the multiple different measurement units further need to be determined. The corresponding calculation rule is determined according to the selection operation executed on the selection control of the calculation symbol, and then the parameters obtained by performing measurement unit unification on the calculation parameters corresponding to the different measurement units are calculated to obtain the calculation result.

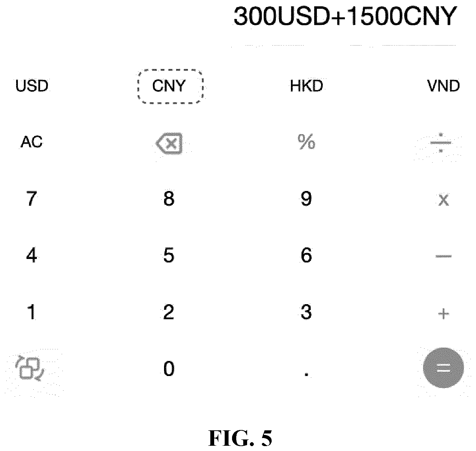

Referring to FIG. 5, FIG. 5 is another schematic diagram illustrating acquisition of a calculation parameter and determination of a measurement unit of the calculation parameter.

After a calculation parameter is acquired every time, a measurement unit of the presently acquired calculation parameter is determined according to a selection operation executed on the selection control of the measurement unit, namely a measurement unit determined after the calculation parameter is acquired is the measurement unit of the presently acquired calculation parameter. For example, the calculation parameter 300 is acquired, and the measurement unit USD of the calculation parameter 300 is determined according to a selection operation executed on the selection control of the measurement unit.

Before a calculation parameter acquired next time is acquired and a measurement unit of the calculation parameter acquired next time is determined, a calculation symbol between the calculation parameters corresponding to the two determined measurement units needs to be determined at first. For example, after the calculation parameter 300 is acquired and the measurement unit USD of the calculation parameter 300 is determined, it is necessary to acquire a calculation parameter 1,500 of another measurement unit and determine the measurement unit of the calculation parameter 1,500. Before the calculation parameter 1,500 is acquired, a calculation symbol is determined at first. The sum calculation symbol "+" is illustrated in the figure. Then, the calculation parameter 1,500 is acquired, and the measurement unit CNY of the calculation parameter 1,500 is determined.

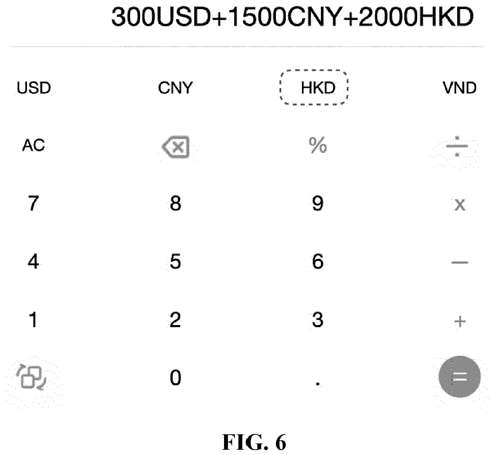

Referring to FIG. 6, FIG. 6 is another schematic diagram illustrating acquisition of a calculation parameter and determination of a measurement unit of the calculation parameter. Calculation relationships between calculation parameters corresponding to three different measurement units are illustrated in the figure. The measurement unit of the calculation parameter 300 is USD, the measurement unit of the calculation parameter 1,500 is CNY, and a measurement unit of a calculation parameter 2,000 is HKD. After the measurement unit USD of the calculation parameter 300 is determined, the calculation relationship with the calculation parameter 1,500 of which the measurement unit is CNY is determined, and a calculation symbol is "+". After the measurement unit CNY of the calculation parameter 1,500 is determined, the calculation relationship with the calculation parameter 2,000 of which the measurement unit is HKD is continued to be determined, and a calculation symbol is "+". Both the calculation symbols between 300USD, 1,500CNY and 2,000HKD are the sum calculation symbol "+", and it indicates that 300USD, 1,500CNY and 2,000HKD are to be summed.

At S400, measurement unit unification is performed on the at least two calculation parameters of the different measurement units to obtain the calculation result of the calculation parameters.

After the calculation parameter is acquired and the measurement unit of the acquired calculation parameter is determined, measurement unit unification may be performed on the calculation parameters corresponding to at least two different measurement units. The acquired calculation parameter is a calculation parameter to be converted, the measurement unit of the calculation parameter is a measurement unit to be converted, and the calculation parameter corresponding to the measurement unit to be converted is converted into a calculation parameter corresponding to a target measurement unit in the unified manner according to a conversion relationship between the target conversion measurement unit and the measurement unit to be converted. In such a manner, the measurement unit unification of at least two calculation parameters of different measurement units may be implemented. In such case, the acquired calculation parameters corresponding to the multiple different measurement units have been converted into calculation parameters of the same measurement unit in the unified manner. Herein, the target measurement unit is a measurement unit of the calculation parameters corresponding to the different measurement units after measurement unit unification.

According to the technical solution of the present application, calculation parameters of multiple different measurement units to be converted may be simultaneously converted on the same application interface of the calculation application to obtain needed calculation results after conversion, so that the condition that a calculation parameter of only one measurement unit may be converted at one time and operations need to be repeated for many times when calculation parameters of multiple different measurement units are converted is reduced, furthermore, user experiences are improved, and greater convenience for operation and a higher calculation speed are achieved. In addition, all the operations are completed on the same interface of the calculation application, so that convenience for operation is improved, switching operations of the user between different interfaces in a calculation process are reduced. Therefore, operating steps of the user are reduced, and the user experiences are improved.

In another embodiment, after multiple calculation parameters are acquired and measurement units of the acquired multiple calculation parameters are determined, measurement unit unification is performed on the calculation parameters corresponding to multiple measurement units. The multiple measurement units may be different measurement units. The calculation parameters corresponding to the different measurement units are unified to obtain calculation parameters of the same measurement unit, and the same measurement unit is determined as the target measurement unit in the embodiment, i.e., the measurement unit of the calculation result.

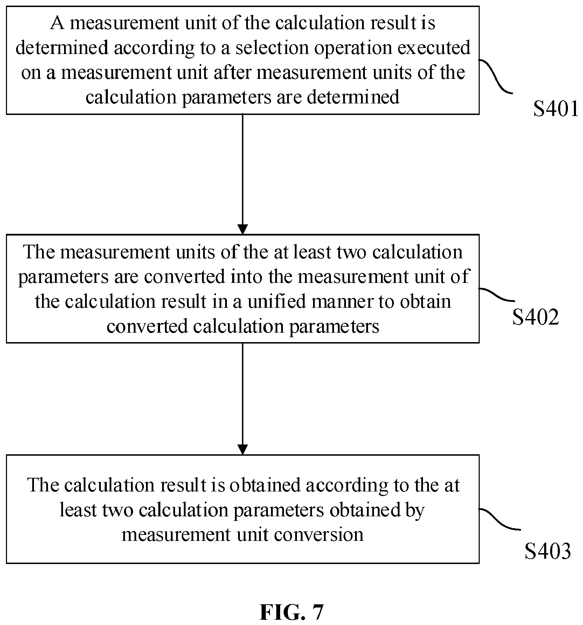

Referring to FIG. 7, FIG. 7 is a flow chart showing obtaining of a calculation result of calculation parameters. S400 includes operations as follows.

At S401, a measurement unit of the calculation result is determined according to a selection operation executed on a measurement unit after measurement units of the calculation parameters are determined.

At S402, the measurement units of the at least two calculation parameters are converted into the measurement unit of the calculation result in a unified manner to obtain converted calculation parameters.

At S403, the calculation result is obtained according to the at least two calculation parameters obtained by measurement unit conversion.

At S401, the measurement unit of the calculation result is determined according to the selection operation executed on the measurement unit after the measurement units of the calculation parameters are determined.

After the measurement units of the calculation parameters are determined and when the selection operation is executed again on the selection control of the measurement unit, the measurement unit corresponding to the selection operation executed again on the selection control of the measurement unit is determined as the measurement unit of the calculation result according to the selection operation executed again on the selection control of the measurement unit. The measurement unit of the calculation result may also be the target measurement unit.

In another embodiment, the selection control determined by the selection operation executed on the selection control of the measurement unit after the measurement units of the calculation parameters are determined may be selection controls of multiple different measurement units displayed on the application interface of the calculation application. The measurement unit of the calculation result is determined through the displayed selection controls of the multiple different measurement units.

In another embodiment, the selection control determined by the selection operation executed on the selection control of the measurement unit after the measurement units of the calculation parameters are determined may also be a selection control displayed at a display position different from those of the displayed selection controls of the multiple different measurement units.

For example, the selection controls of the multiple different measurement units are displayed in the second display region on the application interface of the calculation application, the form of the floating window is adopted on the application interface of the calculation application, and the measurement unit of the calculation result is displayed in the floating window. After the measurement unit of the calculation parameter is determined, no calculation parameter is acquired, the calculation result needs to be obtained, the selection control of the result symbol "=" of the calculation application is selected, and then the floating window is popped up. The measurement unit of the calculation result is determined according to the selection operation executed on the selection control of the measurement unit displayed in the floating window.

In another embodiment, the measurement unit of the calculation result may be determined by the calculation application according to a preset rule. For example, a measurement unit of a first input calculation parameter is determined as the measurement unit of the calculation result; or, a measurement unit of a last input calculation parameter is determined as the measurement unit of the calculation result; or, an international standard measurement unit is determined as the measurement unit of the calculation result; or, a general measurement unit of a present position of a mobile terminal where the calculation application runs is determined as the measurement unit of the calculation result. For example, for calculation of different currency types in China, China Yuan may be determined as a measurement unit of a calculation result.

For this solution, the measurement unit of the first input calculation parameter is determined as the measurement unit of the calculation result; or, the measurement unit of the last input calculation parameter is determined as the measurement unit of the calculation result. In such a manner, input operations of the user may be reduced, and the user may adjust a unit of an input calculation parameter according to a measurement unit of a wanted calculation result. Therefore, the intelligence of the device is improved, meanwhile, operations of the user are simplified, and better and more intelligent user experiences are provided for the user.

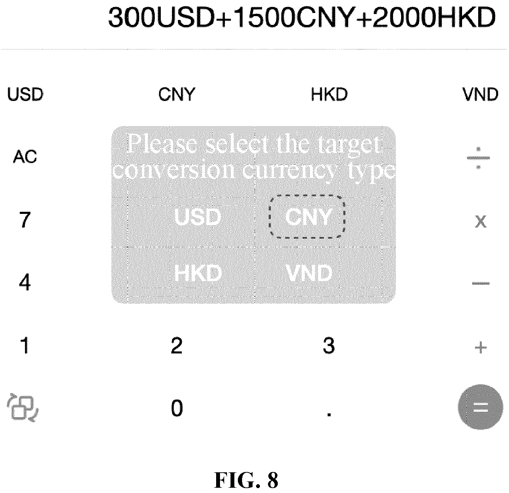

Referring to FIG. 8, FIG. 8 is a schematic diagram illustrating displaying of a measurement unit of a calculation result.

After the calculation parameter 300 is acquired, the measurement unit USD of the calculation parameter 300 is determined, the calculation symbol "+" is acquired, the calculation parameter 1,500 is acquired, the measurement unit CNY of the calculation parameter 1,500 is determined, the calculation symbol "+" is acquired, the calculation parameter 2,000 is acquired and the measurement unit HKD of the calculation parameter 2,000 is determined, no other calculation parameters and corresponding measurement units are continued to be acquired. Then, the calculation rule "=" of the calculation result is determined according to the selection operation executed on the selection control for obtaining the calculation result.

After "=" of the calculation result is acquired, a floating window for displaying the selection control of the measurement unit of the calculation result is popped up, for example, the gray window including USD, CNY, HKD and VND in FIG. 8. It may be prompted in the floating window that "please select the target conversion currency type", and the measurement unit of the calculation result may further be determined through the selection operation executed on the selection control of the measurement unit displayed in the floating window. For example, the selection operation executed on the measurement unit displayed in the floating window is a selection operation over the selection control CNY, and it is determined that the measurement unit of the calculation result is CNY, as illustrated by the dashed line in the figure.

In another embodiment, the number of selection controls of measurement units of calculation results displayed in the floating window may be adjusted as required and is not limited herein. Of course, as illustrated in the figure, a preset number of selection controls may be displayed, while the selection controls of the other measurement units are hidden. The floating window may slide upwards and downwards or slide leftwards and rightwards, and the selection controls of different measurement units may be displayed by sliding the floating window. The floating window may also be paged, and the selection controls of different measurement units are displayed on different display pages.

At 402, the measurement units of the at least two calculation parameters are converted into the measurement unit of the calculation result in the unified manner to obtain the converted calculation parameters.

After the measurement unit of the calculation result is determined, unified conversion to the measurement unit of the calculation result may be implemented according to conversion relationships between the measurement unit of the calculation result and the measurement units of the acquired multiple calculation parameters. After the measurement units are converted, the calculation parameters are also changed to obtain the converted calculation parameters, and the converted calculation parameters are parameters corresponding to the measurement unit of the calculation result.

At 403, the calculation result is obtained according to the at least two calculation parameters obtained by measurement unit conversion.

After the measurement units of the calculation parameters are converted to obtain the converted calculation parameters, the calculation result is obtained according to the calculation rule of the determined calculation symbol. The calculation result is a calculation parameter of the target measurement unit.

Through the technical solution of S400, the calculation parameters of the different measurement units may be converted into parameters corresponding to the needed measurement unit in the unified manner, so that complex operations for independently converting the calculation parameters of the multiple different measurement units for many times are reduced, the calculation efficiency is improved, and the user experiences are also improved.

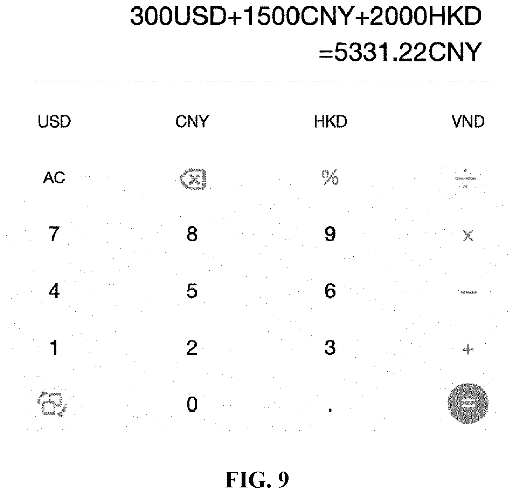

Referring to FIG. 9, FIG. 9 is a schematic diagram illustrating obtaining of a calculation result.

300USD, 1,500CNY and 2,000HKD are summed to obtain a calculation result 5,331.22CNY of which a measurement unit is CNY.

In another embodiment, the following operation is further included: the measurement unit of the calculation result is redetermined, namely the target measurement unit is switched.

After the measurement unit of the calculation result is determined and the corresponding calculation result is obtained, the measurement unit of the calculation result may further be redetermined, namely the measurement unit of the calculation result is switched. Specifically, the following operation may be included: a new measurement unit of the calculation result is determined according to a selection operation executed on a measurement unit after the measurement unit of the calculation result is determined last time. The measurement units of the at least two calculation parameters are converted into the new measurement unit of the calculation result in the unified manner to obtain new converted calculation parameters. A new calculation result is obtained according to the at least two new calculation parameters obtained by measurement unit conversion.

In such a manner, the calculation parameters may be converted into different target measurement units to obtain calculation results of different measurement units, so that the application richness is improved, different user requirements are met, unnecessary repeated operations of the user are reduced, and the user experiences are improved.

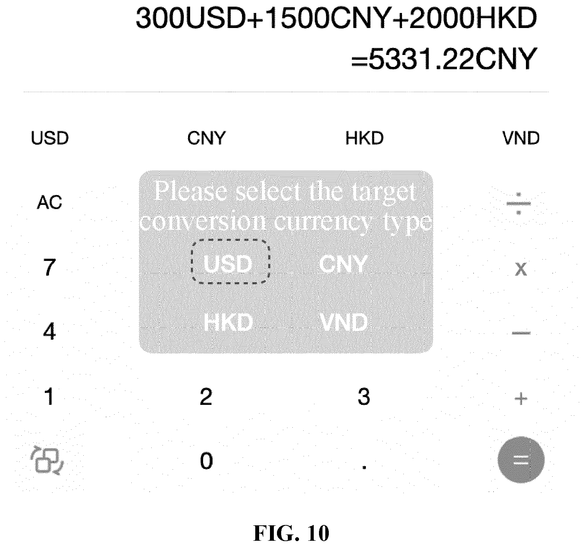

Referring to FIG. 10, FIG. 10 is a schematic diagram illustrating redetermination of a measurement unit of a calculation result.

After the calculation result of which the measurement unit is CNY is obtained last time, the selection operation executed on the selection control for obtaining the calculation result is determined, namely the selection operation executed on the selection control of the calculation symbol "=" is determined. Then, the floating window for displaying the selection control of the measurement unit of the calculation result is popped up again, and the new measurement unit USD of the calculation result is determined according to the selection operation executed on the selection control. Parameters 300 and 1,500 are converted into new calculation parameters of which the measurement units are USD according to the conversion relationship between CNY and USD and the conversion relationship between HKD and USD. A new calculation result is obtained according to the converted new calculation parameters, 300USD and the calculation rule corresponding to the calculation symbol.

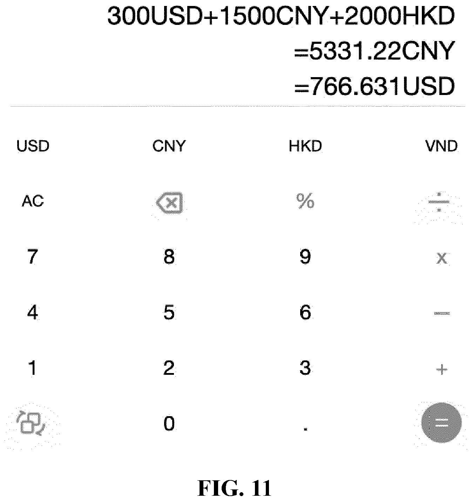

Referring to FIG. 11, FIG. 11 is a schematic diagram illustrating a calculation result after redetermination of a measurement unit. The calculation result of which the measurement unit is USD is 766.631USD. The calculation results of different measurement units may be displayed cumulatively. They may also be displayed independently, namely a last calculation result is deleted and only a present calculation result is displayed.

In another embodiment, after the calculation result is obtained, the calculation result may further be calculated. Specifically, the calculation result may further be calculated through a calculation rule of a calculation symbol in a virtual calculation symbol keyboard of the calculation application. The operability of the calculation application is improved, and the user experiences are improved.

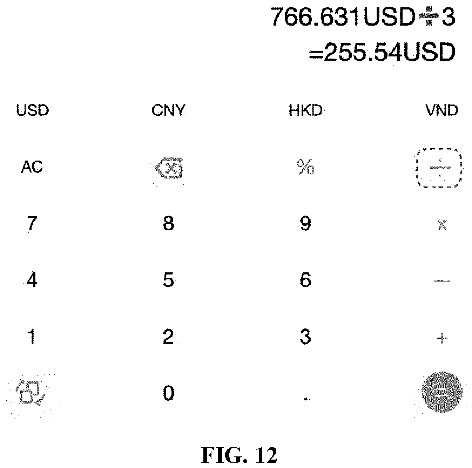

Referring to FIG. 12, FIG. 12 is another schematic diagram illustrating data processing. In the figure, based on FIG. 11, the calculation result obtained in FIG. 11 is further processed. Further processing over the calculation result is determined according to a selection operation executed on the selection control of the calculation symbol and the selection operation executed on a number control of the virtual numeric keyboard to obtain a processing result. A measurement unit of the processing result is the same as the measurement unit of the calculation result.

Through the embodiment, the calculation result or the processing result may be continued to be further processed on the same page without page switching, so that an operation of switching to an independent calculation page for recalculation when the calculation result is further calculated is reduced, and convenience for use and the user experiences are improved.

After division calculation is determined to be performed on 766.631USD, 766.631USD is divided by 3 to obtain a processing result 255.54USD.

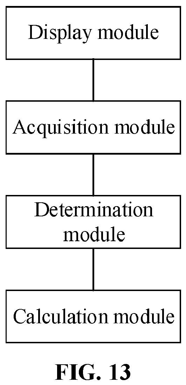

Referring to FIG. 13, FIG. 13 is a structure diagram of a data processing apparatus according to another embodiment. The data processing apparatus includes: a display module, an acquisition module, a determination module and a calculation module.

The display module is configured to display selection controls of at least two different measurement units.

The acquisition module is configured to acquire a calculation parameter.

The determination module is configured to determine a measurement unit of the calculation parameter according to a selection operation executed on a selection control.

The calculation module is configured to perform measurement unit unification on at least two calculation parameters of different measurement units to obtain a calculation result of the calculation parameters. In FIG. 13, the four modules are illustrated, and other modules are not illustrated.

In another embodiment, the determination module includes a first determination unit, which is configured to determine a measurement unit corresponding to a calculation parameter according to a selection operation executed on a selection control after the calculation parameter is acquired.

In another embodiment, the calculation module includes: a second determination unit, a conversion unit and a calculation unit.

The second determination unit is configured to determine a measurement unit of the calculation result according to a selection operation executed on a measurement unit after measurement units of the calculation parameters are determined.

The conversion unit is configured to convert the measurement units of the at least two calculation parameters into the measurement unit of the calculation result in a unified manner to obtain converted calculation parameters.

The calculation unit is configured to obtain the calculation result according to the at least two calculation parameters obtained by measurement unit conversion.

In another embodiment, the display module includes at least one of:
a first display module, configured to display the selection controls of the at least two different measurement units on an application interface of a calculation application; or
a second display module, configured to display the selection controls of the at least two different measurement units in a floating window.

In another embodiment, an electronic device is also provided, which includes: a processor and a memory configured to store executable instructions capable of running in the processor; when the processor is configured to run the executable instructions, the executable instructions execute the method as described in any abovementioned embodiments.

In another embodiment, a computer-readable storage medium is also provided, in which computer-executable instructions are stored; the computer-executable instructions are executed by a processor to implement the method as described in any abovementioned embodiments.

In another embodiment, a data processing method for a practical application scenario is also provided.

During outbound travels, there may be expenses of currency units of various currency types. For example, for a travel to the USA, a ticket may be booked by using China Yuan, a hotel room may be reserved by using Hong Kong dollars, and in the USA, US dollars are needed for payment. When several people travel together, different people may pay by using different currency types, finally bringing troubles to settlement.

A common calculation application only supports simultaneous currency conversion of one to two currency units, with only one currency type to be converted selected for currency conversion at one time, and after currency conversion is completed, a calculation function cannot be realized and it is necessary to return to a calculation page of the calculation application, referring to FIG. 1. Such operations are relatively complex, and a result indicating an average expense of every one may be calculated through multiple operating steps.

There is made such a hypothesis that three people A, B and C travel together and consumption standards of them are the same. A is responsible for reserving hotel rooms with 1,500RMB (marked as M1), B is responsible for booking tickets with 2,000HKD (marked as M2), and C is responsible for all expenses 300USD (marked as M3) at the destination. The exchange rate between RMB and HKD is HI, and the exchange rate between RMB and USD is H2. An average expense of the three is finally calculated according to RMB, and the total expense is W RMB.

Through the embodiment of the technical solution, it may be obtained that totally W=M1+M2*H1+M3*H2 (RMB) is spent and everyone needs to pay W/3 RMB Currencies of multiple different currency types may be converted at the same time, and currency conversion and other basic calculations may be completed on the same interface. Operations of frequently switching different interfaces for basic calculations and currency conversion are reduced, the operations are completed on the same interface, and more conveniences are brought to use.

It is to be noted that "first" and "second" in the embodiment of the present disclosure are only for convenient expression and distinguishing and have no other special meanings.

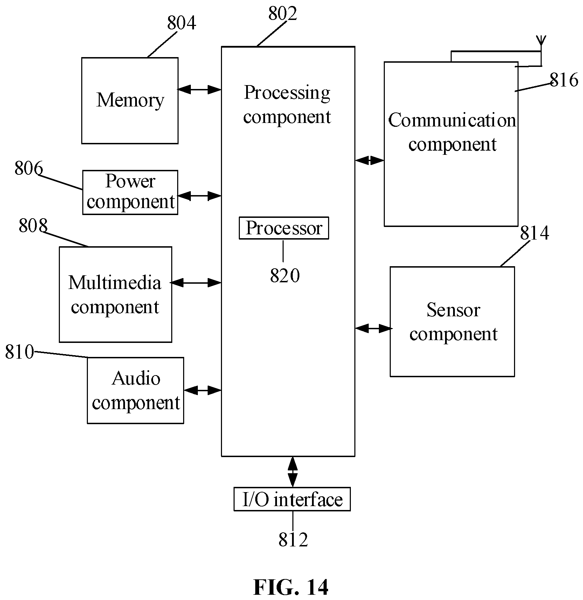

FIG. 14 is a block diagram of a terminal device, according to an exemplary embodiment. For example, the terminal device may be a mobile phone, a computer, a digital broadcast terminal, a messaging device, a gaming console, a tablet, a medical device, exercise equipment, a personal digital assistant, and the like.

Referring to FIG. 14, the terminal device may include one or more of the following components: a processing component 802, a memory 804, a power component 806, a multimedia component 808, an audio component 810, an input/output (I/O) interface 812, a sensor component 814, or a communication component 816.

The processing component 802 typically controls overall operations of the terminal device, such as the operations associated with display, telephone calls, data communications, camera operations, and recording operations. The processing component 802 may include one or more processors 820 to execute instructions to perform all or part of the steps in the abovementioned method. Moreover, the processing component 802 may include one or more modules which facilitate interaction between the processing component 802 and other components. For instance, the processing component 802 may include a multimedia module to facilitate interaction between the multimedia component 808 and the processing component 802.

The memory 804 is configured to store various types of data to support the operation of the terminal device. Examples of such data include instructions for any applications or methods operated on the terminal device, contact data, phonebook data, messages, pictures, video, etc. The memory 804 may be implemented by any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, and a magnetic or optical disk.

The power component 806 provides power for various components of the terminal device. The power component 806 may include a power management system, one or more power supplies, and other components associated with generation, management and distribution of power for the terminal device.

The multimedia component 808 includes a screen providing an output interface between the terminal device and a user. In some embodiments, the screen may include a liquid crystal display (LCD) and a touch panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also detect a period of time and a pressure associated with the touch or swipe action. In some embodiments, the multimedia component 808 includes a front camera and/or a rear camera. The front camera and/or the rear camera may receive external multimedia data when the terminal device is in an operation mode, such as a photographing mode or a video mode. Each of the front camera and the rear camera may be a fixed optical lens system or have focusing and optical zooming capabilities.

The audio component 810 is configured to output and/or input an audio signal. For example, the audio component 810 includes a microphone (MIC), and the MIC is configured to receive an external audio signal when the terminal device is in an operation mode, such as a call mode, a recording mode and a voice recognition mode. The received audio signal may further be stored in the memory 804 or sent through the communication component 816. In some embodiments, the audio component 810 further includes a speaker configured to output the audio signal.

The I/O interface 812 provides an interface between the processing component 802 and peripheral interface modules, such as a keyboard, a click wheel, buttons and the like. The buttons may include, but are not limited to: a home button, a volume button, a starting button and a locking button.

The sensor component 814 includes one or more sensors configured to provide status assessments in various aspects for the terminal device. For instance, the sensor component 814 may detect an on/off status of the terminal device and relative positioning of components, such as a display and small keyboard of the terminal device, and the sensor component 814 may further detect a change in a position of the terminal device or a component of the terminal device, presence or absence of contact between the user and the terminal device, orientation or acceleration/deceleration of the terminal device and a change in temperature of the terminal device. The sensor component 814 may include a proximity sensor configured to detect presence of an object nearby without any physical contact. The sensor component 814 may also include a light sensor, such as a complementary metal oxide semiconductor (CMOS) or charge coupled device (CCD) image sensor, configured for use in an imaging application. In some embodiments, the sensor component 814 may also include an acceleration sensor, a gyroscope sensor, a magnetic sensor, a pressure sensor or a temperature sensor.

The communication component 816 is configured to facilitate wired or wireless communication between the terminal device and other devices. The terminal device may access a communication-standard-based wireless network, such as a wireless fidelity (WiFi) network, a 2nd-generation (2G) or 3rd-generation (3G) network or a combination thereof. In an exemplary embodiment, the communication component 816 receives a broadcast signal or broadcast associated information from an external broadcast management system through a broadcast channel. In an exemplary embodiment, the communication component 816 further includes a near field communication (NFC) module to facilitate short-range communications. For example, the NFC module may be implemented based on a radio frequency identification (RFID) technology, an infrared data association (IrDA) technology, an ultra-wide band (UWB) technology, a Bluetooth (BT) technology and another technologies.

In an exemplary embodiment, the terminal device may be implemented by one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors or other electronic components, and is configured to execute the abovementioned method.

Other implementation solutions of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

## Claims

1. A data processing method, **characterized in that** the method comprises:
displaying (S100) selection controls of at least two different measurement units;
acquiring (S200) a calculation parameter;
determining (S300) a measurement unit of the calculation parameter according to a selection operation executed on a selection control; and
performing (S400) measurement unit unification on at least two calculation parameters of different measurement units to obtain a calculation result of the calculation parameters.

2. The data processing method of claim 1, wherein the determining the measurement unit of the calculation parameter according to the selection operation executed on the selection control comprises:
determining the measurement unit corresponding to the calculation parameter according to a selection operation executed on a selection control after the calculation parameter is acquired.

3. The data processing method of claim 1 or 2, wherein the performing the measurement unit unification on the at least two calculation parameters of the different measurement units to obtain the calculation result of the calculation parameters comprises:
determining a measurement unit of the calculation result according to a selection operation executed on a measurement unit after measurement units of the calculation parameters are determined;
converting the measurement units of the at least two calculation parameters into the measurement unit of the calculation result in a unified manner to obtain converted calculation parameters; and
obtaining the calculation result according to the at least two calculation parameters obtained by measurement unit conversion.

4. The data processing method of claim 1 or 2, wherein the displaying the selection controls of the at least two different measurement units comprises at least one of:
displaying the selection controls of the at least two different measurement units on an application interface of a calculation application; or
displaying the selection controls of the at least two different measurement units in a floating window.

5. The data processing method of claim 1 or 2, wherein the measurement unit comprises at least one of:
currency units of different currency types;
weight units of different weight measurement systems;
volume units of different volume measurement systems;
temperature units of different temperature measurement systems; or
humidity units of different humidity measurement systems.

6. A data processing apparatus, **characterized in that** the apparatus comprises:
a display module, configured to display selection controls of at least two different measurement units;
an acquisition module, configured to acquire a calculation parameter;
a determination module, configured to determine a measurement unit of the calculation parameter according to a selection operation executed on a selection control; and
a calculation module, configured to perform measurement unit unification on at least two calculation parameters of different measurement units to obtain a calculation result of the calculation parameters.

7. The data processing apparatus of claim 6, wherein the determination module comprises:
a first determination unit, configured to determine the measurement unit corresponding to the calculation parameter according to a selection operation executed on a selection control after the calculation parameter is acquired.

8. The data processing apparatus of claim 6 or 7, wherein the calculation module comprises:
a second determination unit, configured to determine a measurement unit of the calculation result according to a selection operation executed on a measurement unit after measurement units of the calculation parameters are determined;
a conversion unit, configured to convert the measurement units of the at least two calculation parameters into the measurement unit of the calculation result in a unified manner to obtain converted calculation parameters; and
a calculation unit, configured to obtain the calculation result according to the at least two calculation parameters obtained by measurement unit conversion.

9. The data processing apparatus of claim 6 or 7, wherein the display module comprises at least one of:
a first display module, configured to display the selection controls of the at least two different measurement units on an application interface of a calculation application; or
a second display module, configured to display the selection controls of the at least two different measurement units in a floating window.

10. A computer-readable storage medium, in which computer-executable instructions are stored; the computer-executable instructions are executed by a processor to implement the method of any of claims 1 to 5.
